(19) Europäisches Patentamt
European Patent Office
Office européen des brevets

(11) **EP 3 556 028 B1**

(12) **FASCICULE DE BREVET EUROPEEN**

(45) Date de publication et mention
de la délivrance du brevet:
**02.09.2020 Bulletin 2020/36**

(21) Numéro de dépôt: **17825577.4**

(22) Date de dépôt: **14.12.2017**

(51) Int Cl.:
***H04B 7/185*** *(2006.01)*

(86) Numéro de dépôt international:
**PCT/FR2017/053591**

(87) Numéro de publication internationale:
**WO 2018/109411 (21.06.2018 Gazette 2018/25)**

(54) **PROCÉDÉ DE TRAITEMENT DE L'EFFET DOPPLER D'UN SIGNAL TRANSMIS PAR UN DISPOSITIF ÉMETTEUR VERS UN SATELLITE NON GÉOSYNCHRONE**

VERFAHREN ZUR VERARBEITUNG DES DOPPLEREFFEKTES EINES VON EINER SENDEVORRICHTUNG AN EINEN NICHT-GEOSYNCHRONEN SATELLITEN ÜBERTRAGENEN SIGNALS

METHOD FOR PROCESSING THE DOPPLER EFFECT OF A SIGNAL TRANSMITTED BY A TRANSMITTER DEVICE TO A NON-GEOSYNCHRONOUS SATELLITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2016 FR 1662549**

(43) Date de publication de la demande:
**23.10.2019 Bulletin 2019/43**

(73) Titulaire: **Sigfox**
**31670 Labege (FR)**

(72) Inventeurs:
• **FOURTET, Christophe**
**82170 Pompignan (FR)**
• **FERNANDEZ, David**
**31400 Toulouse (FR)**

(74) Mandataire: **Ipside**
**6, Impasse Michel Labrousse**
**31100 Toulouse (FR)**

(56) Documents cités:
**EP-A1- 1 006 679          US-A1- 2010 290 356
US-A1- 2012 313 815**

• **LIN JIANGNAN ET AL: "Map Estimation Based on Doppler Characterization in Broadband and Mobile LEO Satellite Communications", 2016 IEEE 83RD VEHICULAR TECHNOLOGY CONFERENCE (VTC SPRING), IEEE, 15 mai 2016 (2016-05-15), pages 1-5, XP032918574, DOI: 10.1109/VTCSPRING.2016.7504336**

EP 3 556 028 B1

**Description**

## DOMAINE TECHNIQUE

La présente invention appartient au domaine des systèmes de télécommunication sans fil et concerne plus particulièrement un procédé de transmission d'un signal entre au moins un dispositif émetteur et au moins un satellite se déplaçant en orbite.

L'invention trouve notamment une application dans le domaine des objets connectés.

## ÉTAT DE LA TECHNIQUE

La présente invention trouve une application particulièrement avantageuse, bien que nullement limitative, dans les systèmes de télécommunication sans fil à bande ultra étroite. Par « bande ultra étroite » (« *Ultra Narrow Band* » ou UNB dans la littérature anglo-saxonne), on entend que le spectre fréquentiel instantané des signaux radioélectriques émis par un dispositif émetteur, à destination d'un satellite, est de largeur fréquentielle inférieure à deux kilohertz, voire inférieure à un kilohertz.

De tels systèmes de télécommunication sans fil UNB sont particulièrement adaptés pour des applications du type M2M (acronyme anglo-saxon pour « *Machine-to-Machine* ») ou du type « Internet des objets » (« *Internet of Things* » ou IoT dans la littérature anglo-saxonne).

Un des inconvénients majeurs des systèmes de télécommunication sans fil comprenant un dispositif émetteur et un satellite non géosynchrone est l'apparition de l'effet Doppler venant perturber la transmission des signaux entre le dispositif émetteur et le satellite. L'effet Doppler, fonction de la vitesse de l'objet en mouvement et de l'angle entre le vecteur vitesse de l'objet en mouvement et la direction entre les deux objets, modifie à chaque instant la fréquence des signaux transmis. Ainsi, pour la réception d'un signal ayant été émis sur une fréquence d'émission constante au cours du temps, la fréquence de réception du signal au début de la réception est différente de la fréquence de réception du signal à la fin de la réception. La variation de la fréquence de réception au cours du temps peut en outre être importante du fait, pour des applications de type M2M ou IoT, le débit de données est généralement faible de sorte que la durée du signal peut être importante. Cette évolution de la fréquence de réception au cours du temps rend la détection de tels signaux complexe au niveau du satellite.

Un autre inconvénient induit par l'apparition de l'effet Doppler sur les signaux est la diminution de la capacité du canal de communication pour une même largeur de bande. Par ailleurs, l'effet Doppler implique également l'augmentation du nombre de collisions entre signaux. Un exemple d'état de la technique est décrit par US2010/290356.

## EXPOSÉ DE L'INVENTION

La présente invention a pour objectif de remédier à tout ou partie des limitations des solutions de l'art antérieur, notamment celles exposées ci-avant, en proposant une solution permettant à un satellite d'un système de télécommunication de détecter plus facilement des signaux émis par des dispositifs émetteurs et/ou de réduire les collisions entre signaux émis par de tels dispositifs émetteurs.

A cet effet, et selon un premier aspect, l'invention concerne un procédé de transmission d'un signal par un dispositif émetteur vers un satellite se déplaçant en orbite autour de la Terre, ledit dispositif émetteur et le satellite comprenant des moyens de télécommunication sans fil.

On entend par dispositif émetteur tout objet muni d'un moyen de télécommunication apte à émettre un signal. Le dispositif émetteur peut être par exemple un objet connecté. On entend par objet connecté, tout appareil connecté à un réseau informatique d'échanges de données de type Internet, interrogeable ou contrôlable à distance. L'objet connecté est de type quelconque. Il peut être par exemple une station météo collectant les données de températures intérieure et extérieure d'une habitation, un capteur de mesure du niveau de liquide ou de gaz dans une citerne ou une cuve, un détecteur d'occupation d'une place de parking, un capteur de mesure du flux de personnes accédant à un bâtiment, etc. L'objet connecté peut également être une base de relais entre un appareil connecté et un réseau. Cette base de relais peut faire office de répétiteur ou de tampon en stockant des données à transmettre au réseau dans une mémoire informatique de la base de relais.

Selon l'invention, ledit procédé comprend des étapes de :

- réception par ledit dispositif émetteur d'un signal émis par le satellite, dit signal de présence ;
- analyse d'au moins un décalage fréquentiel induit par effet Doppler sur le signal de présence reçu par ledit dispositif émetteur, l'étape d'analyse comportant une mesure d'une évolution temporelle du décalage fréquentiel induit par effet Doppler sur le signal de présence ;
- estimation, en fonction de l'analyse du décalage fréquentiel induit par effet Doppler sur le signal de présence, d'une évolution temporelle ultérieure dudit décalage fréquentiel à partir d'un instant ultérieur prédéterminé de début d'émission du signal à émettre par le dispositif émetteur, dit instant d'émission, et sur une durée prédéterminée dudit signal à émettre ;

- précompensation de l'évolution temporelle ultérieure estimée du décalage fréquentiel sur le signal à émettre ;
- émission du signal par ledit dispositif émetteur à partir de l'instant d'émission.

Ainsi, le signal émis par le dispositif émetteur pouvant être précompensé durant la majeure partie de son émission, voire préférentiellement à chaque instant de son émission, est reçu par le satellite sans effet Doppler apparent. En d'autres termes, en prenant l'exemple d'un signal comprenant une porteuse de fréquence constante avant précompensation, le signal est précompensé avant ou au moment de l'émission afin que la fréquence de réception de la porteuse du signal reçu par le satellite soit constante.

Au cours de l'étape d'analyse, l'évolution temporelle du décalage fréquentiel induit par effet Doppler peut être mesurée en mesurant la variation temporelle d'une fréquence principale du signal de présence. La fréquence principale du signal de présence est représentative par exemple de la fréquence d'une porteuse dudit signal de présence, ou encore de la fréquence d'une sous-porteuse dudit signal de présence, d'une fréquence centrale d'un spectre fréquentiel instantané dudit signal de présence, d'une fréquence minimale ou maximale dudit spectre fréquentiel instantané, etc. La variation temporelle de la fréquence principale du signal de présence reçu est en principe similaire à la variation temporelle du décalage fréquentiel, notamment lorsque le signal de présence est émis avec une fréquence principale constante au cours du temps. La variation temporelle de la fréquence principale peut être mesurée directement en mesurant la différence entre la fréquence principale à deux instants respectifs différents ou indirectement en mesurant la fréquence principale en au moins deux instants respectifs différents, et en calculant la différence entre les fréquences principales mesurées.

Par ailleurs, l'analyse du signal précompensé reçu par le satellite est plus aisée à effectuer, car elle ne nécessite pas un traitement spécifique du signal reçu afin de pallier l'effet Doppler, réduisant *de facto* le nombre de calculs nécessaires pour détecter et éventuellement démoduler le signal reçu.

D'autre part, compte-tenu que la variation temporelle du décalage fréquentiel induit par effet Doppler n'est plus apparente, des algorithmes et des programmes informatiques adaptés à des objets immobiles peuvent être réutilisés sans nécessiter d'adaptation particulière.

Il convient de souligner que seule la variation temporelle du décalage fréquentiel, ou dérive temporelle de la fréquence, due à l'effet Doppler, est corrigée. En effet, la précompensation prend en compte seulement l'évolution temporelle du décalage fréquentiel et non la valeur absolue du décalage fréquentiel. En d'autres termes, la fréquence de réception de la porteuse du signal reçu est sensiblement constante si la porteuse avant précompensation est de fréquence constante, mais peut néanmoins être décalée par rapport à la fréquence théorique de ladite porteuse dudit signal du fait du décalage fréquentiel induit par Effet Doppler. Ainsi, la précompensation vise à obtenir un décalage fréquentiel induit par effet Doppler perçu au niveau du satellite comme étant invariant au cours du temps.

Dans des modes particuliers de mise en œuvre, le procédé de transmission peut comporter en outre l'une ou plusieurs des caractéristiques suivantes, prises isolément ou selon toutes les combinaisons techniquement possibles.

Dans des modes particuliers de mise en œuvre, l'étape de précompensation de l'évolution temporelle ultérieure du décalage fréquentiel comprend une modulation du signal à émettre avec une fréquence opposée à l'évolution temporelle ultérieure.

Dans des modes particuliers de mise en œuvre, l'évolution temporelle ultérieure du décalage fréquentiel est estimée par extrapolation de l'évolution temporelle du décalage fréquentiel mesurée sur le signal de présence.

Dans des modes particuliers de mise en œuvre, l'évolution temporelle mesurée du décalage fréquentiel est représentée par une courbe dont les paramètres sont calculés par une méthode d'ajustement de courbe.

Les méthodes d'ajustement de courbe (en anglais « *curve fitting* ») sont également connues sous le nom de méthodes de régression.

Dans des modes particuliers de mise en œuvre, l'étape d'analyse comporte une mesure d'une fréquence principale du signal de présence et une estimation d'un décalage fréquentiel induit par effet Doppler sur le signal de présence en fonction de la fréquence principale mesurée et en fonction d'une fréquence principale théorique dudit signal de présence, ledit procédé comportant également des étapes de :

- estimation, en fonction du décalage fréquentiel estimé sur le signal de présence, d'un décalage fréquentiel ultérieur induit par effet Doppler à l'instant d'émission du signal à émettre,
- précompensation du décalage fréquentiel ultérieur sur le signal à émettre.

Dans de tels modes de mise en œuvre, la précompensation vise donc à annuler non seulement la variation temporelle du décalage fréquentiel induit par effet Doppler au niveau du satellite, mais également à annuler la valeur absolue dudit décalage fréquentiel au niveau dudit satellite. Ainsi, la précompensation permet d'obtenir en outre que la fréquence de la porteuse du signal reçu par le satellite est sensiblement égale à la fréquence théorique de la porteuse du signal émis par le dispositif émetteur.

Dans des modes particuliers de mise en œuvre, l'étape d'analyse met en œuvre une boucle à verrouillage de phase.

Dans des modes particuliers de mise en œuvre, l'émission du signal de présence est effectuée en continu sur une période prédéterminée.

Selon un deuxième aspect, la présente invention concerne un dispositif émetteur d'un système de télécommunication sans fil, mettant en œuvre un procédé de transmission selon l'un quelconque des modes de mise en œuvre de l'invention.

Dans des modes particuliers de réalisation, le dispositif émetteur est un objet connecté.

Selon un troisième aspect, la présente invention concerne un système de télécommunication sans fil comprenant au moins un dispositif émetteur selon l'un quelconque des modes de réalisation de l'invention et au moins un satellite se déplaçant en orbite autour de la Terre.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un exemple de réalisation d'un système de télécommunication,
- Figure 2 : des courbes illustrant les variations du décalage fréquentiel en fonction de la position d'un satellite relativement à un dispositif émetteur du système de télécommunication de la figure 1,
- Figure 3 : un diagramme illustrant un exemple de mise en œuvre d'un procédé de transmission d'un signal par un dispositif émetteur vers un satellite,
- Figure 4 : deux courbes illustrant un traitement effectué pour la détection d'un signal de présence émis par le satellite,
- Figure 5 : des courbes illustrant les différents traitements effectués sur un signal émis par un dispositif émetteur du système de télécommunication.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

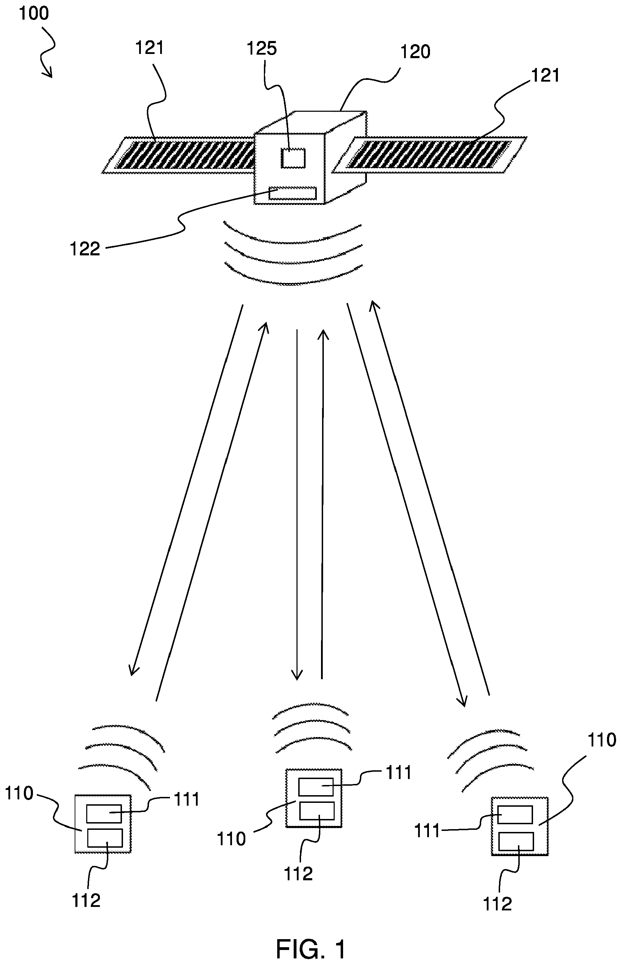

La figure 1 représente schématiquement un système 100 de télécommunication sans fil comprenant une pluralité de dispositifs émetteurs 110 et un satellite 120 d'une constellation de nanosatellites préalablement mis en orbite autour de la Terre.

Les dispositifs émetteurs 110 et le satellite 120 échangent des données sous la forme de signaux radioélectriques. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz).

Les dispositifs émetteurs 110 sont dans le présent exemple non limitatif de réalisation de l'invention des objets connectés comprenant des moyens 111 de télécommunication aptes à transmettre des signaux au satellite 120. Il convient de souligner que les dispositifs émetteurs 110, appelés par la suite objets connectés 110, peuvent également, dans des modes particuliers de réalisation, échanger des signaux entre eux.

Par exemple, les objets connectés 110 comprennent en outre une carte électronique 112 munie d'un microprocesseur apte à traiter des données, voire d'une mémoire informatique apte à stocker des données avant leur transmission par l'intermédiaire de signaux.

Les signaux transmis par les objets connectés 110, et/ou les signaux transmis par le satellite 120, sont par exemple des signaux à bande ultra étroite (UNB, acronyme anglais de « *Ultra Narrow Band* »).

Les signaux UNB échangés au sein du système 100 de télécommunication comprennent une porteuse dont la fréquence est par exemple de l'ordre de la centaine de MHz, voire du GHz. La largeur de bande des signaux UNB est inférieure à 2 kHz, voire inférieure à 1 kHz.

Les moyens 111 de télécommunication reliés à la carte électronique 112 dudit objet connecté 110 comprennent dans le présent exemple non limitatif de l'invention une antenne apte à transmettre et recevoir des signaux UNB, une boucle à verrouillage de phase et un récepteur à super réaction.

Le satellite 120 est dans le présent exemple, un nanosatellite de type CubeSat formée par une structure cubique de dix centimètres de côté. Deux panneaux photovoltaïques 121 déployés de part et d'autre de la structure cubique alimentent le satellite 120 en énergie. La masse du satellite 120 est sensiblement égale à cinq kilos. Une antenne 122 dirigée vers la surface terrestre permet d'émettre ou de recevoir des signaux UNB à destination ou en provenance des objets connectés 110. Il convient de souligner que le satellite 120 est placé sur une orbite de l'ordre de cinq cents kilomètres autour de la Terre. Le satellite 120 se déplace ainsi autour de la Terre à une vitesse de l'ordre de sept kilomètres par seconde, et effectue un tour complet autour de la planète en une durée de l'ordre de quatre-vingt-dix minutes. De manière plus générale, le satellite 120 est en orbite non-géosynchrone, par exemple en orbite LEO (« *Low Earth Orbit* ») ou MEO (« *Medium Earth Orbit* »).

Le satellite 120 comprend en outre une balise 125, également connue sous le terme anglais de « *beacon* », émettant un signal UNB en continu, appelé par la suite signal de présence. Le signal de présence émis par la balise 125 comprend par exemple une porteuse dont la fréquence, au moment de l'émission, est par exemple constante au cours du temps.

Dans une variante de ce mode de réalisation particulier de l'invention, la balise 125 émet des signaux de présence de manière discontinue, préférentiellement à intervalles réguliers. Les signaux de présence émis sont par exemple de durée limitée, par exemple de l'ordre de quelques centaines de millisecondes, de quelques secondes, voire de quelques minutes.

Il convient de souligner que dans un souci d'économie d'énergie, l'objet connecté 110 est généralement, mais non limitativement, en mode veille pendant la plupart du temps et qu'il sort de ce mode veille à intervalles réguliers pour écouter et/ou transmettre des signaux.

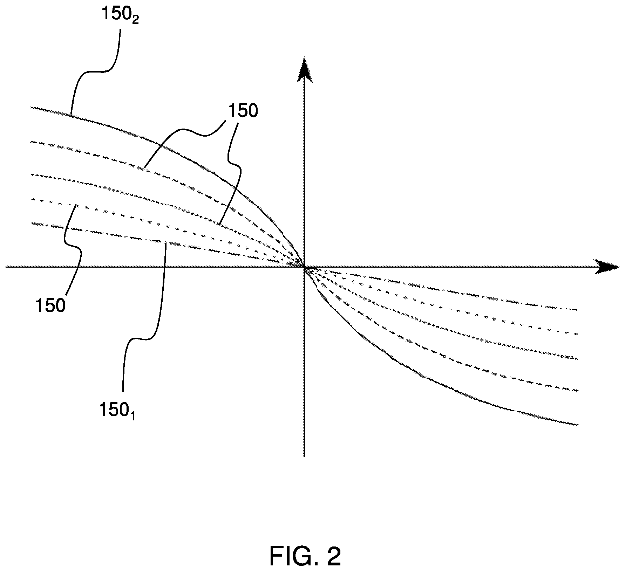

La figure 2 représente un exemple de courbes 150 d'évolution temporelle du décalage fréquentiel subi par des signaux reçus par l'objet connecté 110 en provenance du satellite 120, en fonction de la position du satellite par rapport à l'objet connecté. La figure 2 comprend cinq courbes dont chacune correspond à un angle d'élévation maximum différent du satellite 120 vu par l'objet connecté 110. On entend par angle d'élévation maximum, également appelé sous le terme anglais de « *cross-track angle* », l'angle entre le sol et la direction du satellite 120, mesuré au niveau de l'objet lorsque le satellite 120 est au plus près de l'objet connecté 110. L'abscisse des courbes 150 correspond dans le présent exemple à la différence entre la latitude du satellite 110 et la latitude de l'objet connecté 110. Lorsque l'angle d'élévation maximum est faible, comme dans le cas de la courbe $150_1$, le satellite 120 est vu par l'objet connecté 110 comme étant proche de l'horizon, tandis que lorsque l'angle d'élévation maximum est de l'ordre de quatre-vingt-dix degrés, comme dans le cas de la courbe $150_2$, l'objet connecté 110 est situé sensiblement à l'aplomb de la trajectoire du satellite 120.

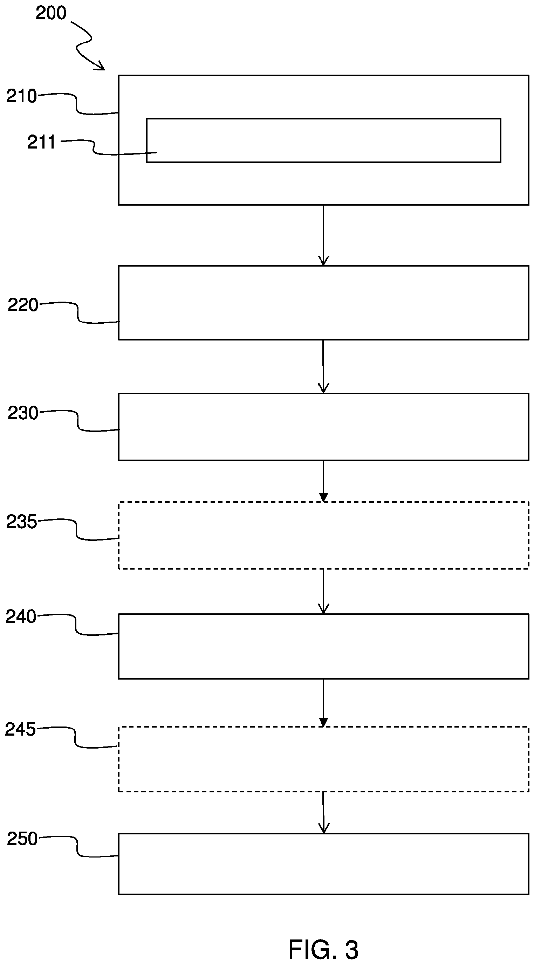

La figure 3 représente sous la forme d'un schéma synoptique un procédé 200 de transmission d'un signal entre un des objets connectés 110 et le satellite 120 se déplaçant en orbite.

Le procédé 200 comprend une étape 210 de réception par l'objet connecté 110 du signal de présence émis par le satellite 120.

Dans des modes préférés de mise en œuvre, le signal de présence comporte une porteuse de fréquence $f_{c\_sat}$ et au moins une sous-porteuse modulée présentant un écart fréquentiel $f_S$ prédéterminé par rapport à la fréquence $f_{c\_sat}$ afin de pouvoir différencier les signaux provenant des balises, des signaux provenant des objets connectés 110, qui ne présentent pas cette forme particulière ou qui présentent dans le cas contraire un écart fréquentiel prédéterminé différent de l'écart fréquentiel $f_S$ du signal de présence.

En d'autres termes, le signal de présence du satellite 120 comprend une information permettant d'identifier la provenance du signal de présence, c'est-à-dire dans le cas présent de la balise 125 du satellite 120, par l'intermédiaire de la présence de la sous-porteuse modulée présentant un écart fréquentiel $f_S$ prédéterminé par rapport à la fréquence $f_{c\_sat}$. De manière plus générale, l'information d'identification du signal de présence peut être codée dans le signal de présence émis par la balise 125 par toute technique connue de l'homme du métier.

Il convient de souligner qu'un tel signal de présence comprenant une porteuse et au moins une sous-porteuse est de type auto-synchrone.

Le signal de présence émis par la balise 125 avec une porteuse de fréquence $f_{c\_sat}$ est reçu par l'objet connecté 110 avec une porteuse de fréquence $f'_{c\_sat} = f_{c\_sat} + \Delta f(t)$ où $\Delta f(t)$ représente le décalage fréquentiel induit par effet Doppler qui varie au cours de la transmission du signal de présence de la balise 125 du satellite 120 vers l'objet connecté 110.

$$\Delta f(t) = \frac{v * \cos\big(\theta(t)\big) * \cos\big(\varphi(t) + E(t)\big) * f_c}{c}$$

où *v* représente la norme du vecteur vitesse du satellite,
$f_c$ la porteuse du signal émis, ici égale à $f_{c\_sat}$,
*c* la vitesse de la lumière,
$\theta$ l'angle entre le vecteur vitesse du satellite 120 et le plan défini par le satellite 120, l'objet 110 et le centre de la Terre,
*E* l'angle d'élévation entre l'horizon et le satellite 120 au niveau de l'objet 110, $\varphi$ l'angle, également appelé angle de couverture, entre le sub-satellite point, c'est-à-dire le point du satellite projeté sur la surface terrestre et l'objet 110.

Il convient de souligner que le décalage fréquentiel varie au cours du temps car les angles $\theta$, $E$ et $\varphi$ varient en fonction du déplacement du satellite 120 par rapport à l'objet connecté 110.

La reconnaissance des signaux de présence grâce à la présence d'une sous-porteuse présentant un écart fréquentiel prédéterminé par rapport à la porteuse est avantageusement utilisée dans le cas d'un réseau de télécommunication, dit hydride, comprenant une pluralité d'objets connectés et une pluralité de satellites, dans lequel un objet connecté peut recevoir des signaux provenant à la fois d'un satellite et d'un autre objet connecté.

L'étape 210 comprend par exemple une sous-étape 211 de détection du signal de la balise 125 parmi une pluralité de signaux reçus. A cet effet, le récepteur à super réaction inclus dans l'objet connecté 110 permet de détecter le signal de présence émis par la balise 125 grâce à la présence de la sous-porteuse dans le signal de présence, dont l'écart fréquentiel par rapport à la fréquence porteuse du signal de présence est avantageusement prédéterminé. Il convient de souligner que le récepteur à super réaction a avantageusement une très faible consommation énergétique de l'ordre de cent microwatts en réception active. La consommation du récepteur à super réaction peut être réduite en effectuant des détections récurrentes, non contigües, par l'intermédiaire de cycles de détection. L'augmentation de la latence entre deux détections consécutives permet notamment de réduire la consommation de ce récepteur.

Par ailleurs, il convient de souligner que le récepteur à super réaction est avantageusement insensible aux variations en fréquence si la porteuse et les sous-porteuses varient de manière semblable, comme c'est le cas lorsque le signal de présence subit l'effet Doppler.

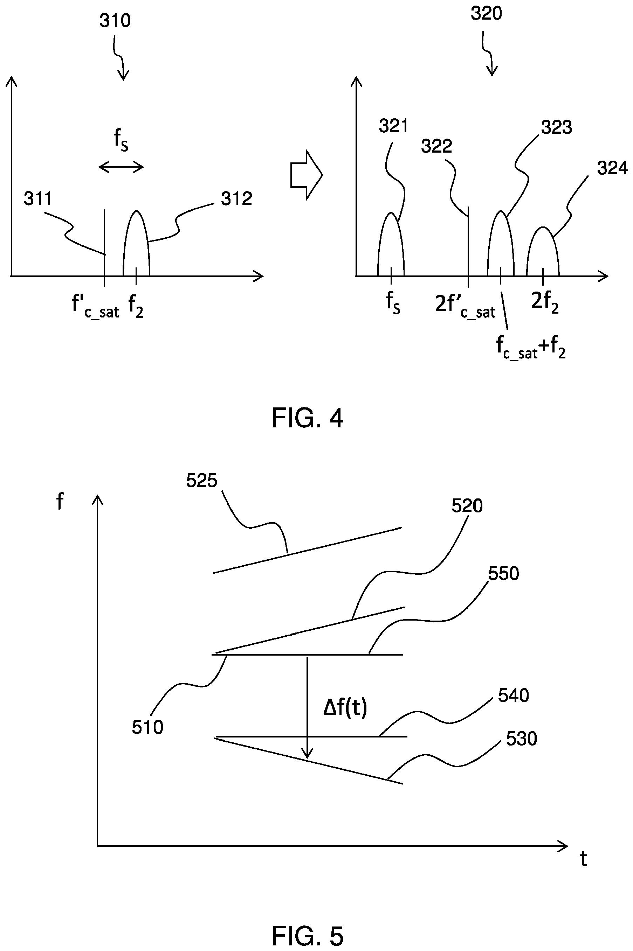

Un exemple de résultat obtenu par ce mécanisme de détection est illustré en figure 4 qui comprend une courbe 310 avant détection et une courbe 320 après détection. La courbe 310 comprend une porteuse 311 de fréquence $f'_{c\_sat}$ et une sous-porteuse 312 modulée de fréquence $f_2$. L'écart fréquentiel entre la porteuse et la sous-porteuse est égal à $f_S$. La détection permet d'extraire un signal 321 de fréquence $f_S$, un signal 322 de fréquence $2f'_{c\_sat}$, un signal 323 de fréquence $f'_{c\_sat}+f_2$ et un signal 324 de fréquence $2f_2$.

Une analyse d'au moins un décalage fréquentiel induit par effet Doppler sur le signal de présence reçu par l'objet connecté 110 est effectuée au cours d'une étape 220 du procédé 200.

Lors de cette étape d'analyse 220, une mesure d'une évolution temporelle du décalage fréquentiel $\Delta f$ induit par effet Doppler sur le signal de présence reçu par l'objet connecté 110 est effectuée.

Cette mesure est par exemple réalisée par l'intermédiaire de la boucle à verrouillage de phase incluse dans l'objet connecté 110 en mesurant la fréquence principale du signal de présence reçu par l'objet connecté 110 à au moins deux instants distincts, préférentiellement à chaque instant de la réception du signal de présence. L'évolution temporelle du décalage fréquentiel $\Delta f$ est en effet égale à la variation temporelle de la fréquence principale du signal de présence reçu.

A partir de l'analyse du décalage fréquentiel induit par effet Doppler sur le signal de présence, une estimation d'une évolution temporelle ultérieure du décalage fréquentiel est effectuée au cours d'une étape 230 du procédé 200. Cette évolution temporelle ultérieure du décalage fréquentiel est notamment calculée afin de prédire le décalage fréquentiel subi par le signal à émettre par l'objet connecté 110 lors de sa transmission à destination du satellite 120. L'évolution temporelle ultérieure du décalage fréquentiel est ainsi estimée à partir d'un instant ultérieur prédéterminé de début d'émission du signal à émettre par le dispositif 110, dit instant d'émission, et sur une durée prédéterminée de ce signal à émettre. Cette durée prédéterminée correspond notamment à la durée d'émission du signal.

Dans des modes préférés de l'invention, l'évolution temporelle ultérieure du décalage est estimée par extrapolation de l'évolution temporelle du décalage fréquentiel préalablement mesurée au cours de l'étape 220.

L'évolution temporelle du décalage fréquentiel préalablement mesurée peut être représentée par l'intermédiaire de la courbe théorique $\Delta f(t)$ dont les paramètres sont ajustés par exemple via des méthodes de régression de courbes, également appelées méthodes d'ajustement de courbes (en anglais *« curve fitting »*).

L'estimation de l'évolution temporelle ultérieure du décalage fréquentiel peut être effectuée à partir de cette courbe théorique, dont les paramètres ont été ajustés.

Une fois que l'évolution temporelle ultérieure est estimée, une précompensation de l'évolution temporelle ultérieure sur le signal de présence est effectuée au cours d'une étape 240 du procédé 200.

Dans des modes préférentiels de mise en œuvre de l'invention, l'étape de précompensation 240 de l'évolution temporelle ultérieure du décalage fréquentiel comprend une modulation du signal à émettre avec une fréquence opposée à l'évolution temporelle ultérieure. La précompensation peut s'effectuer par exemple par l'intermédiaire d'une modulation FM (acronyme anglais de *« Frequency Modulation »*) dont la fréquence modulée est égale à l'opposée de la variation à précompenser.

Il convient de souligner que cette modulation FM est appliquée pardessus une modulation classique d'encodage des données binaires contenues dans le signal émis par l'objet connecté 110. La modulation classique d'encodage des données binaires est, dans le présent exemple non limitatif de l'invention, une modulation du type DBPSK (acronyme anglais de *« Digital Binary Phase-Shift Keying »*) comprenant un débit de 100 bits par secondes.

Le signal précompensé est ensuite émis, à partir de l'instant d'émission, au cours d'une étape 250 du procédé 200.

Il convient de souligner que la précompensation permet notamment d'obtenir au moment de la réception par le satellite 120 du signal émis par l'objet connecté 110, que la fréquence de réception de la porteuse du signal par le satellite 120 est sensiblement constante tout le long de la réception.

Le satellite 120 peut par conséquent traiter le signal reçu sans avoir besoin de lui appliquer un traitement complexe de correction de la dérive temporelle de la fréquence due à l'effet Doppler. Il est ainsi possible de réutiliser les algorithmes développés pour la communication entre des objets immobiles. La puissance de calcul du satellite n'est alors utilisée que pour démoduler des signaux n'ayant apparemment pas subi d'effet Doppler.

Par ailleurs, il convient de souligner que la précompensation proposée dans le présent exemple ne tient pas compte de la valeur absolue du décalage fréquentiel. La fréquence de la porteuse du signal reçu par le satellite 120 est certes constante mais est généralement différente de la fréquence de la porteuse du signal au moment de son émission par l'objet connecté 110.

A cet effet, il peut être prévu de manière optionnelle que l'étape d'analyse comporte en outre une mesure d'une fréquence principale du signal de présence et une estimation d'un décalage fréquentiel induit par effet Doppler sur le signal de présence en fonction de la fréquence principale mesurée et en fonction d'une fréquence principale théorique du signal de présence. La fréquence théorique du signal de présence, qui correspond à la fréquence de la porteuse au moment de l'émission du signal de présence par la balise 125, est dans certains cas connue à l'avance, auquel cas la balise 125 émet sur une fréquence prédéterminée correspondant par exemple à un standard préalablement établi. Lorsque la fréquence d'émission de la porteuse est *a priori* inconnue, la valeur de ladite fréquence d'émission peut être par exemple codée dans le signal de présence, et module par exemple la sous-porteuse modulée dudit signal de présence. La mesure de la fréquence principale peut être notamment effectuée grâce à la boucle à verrouillage de phase incluse dans l'objet connecté 110.

Ainsi, le procédé 200 peut comporter également une étape 235 d'estimation, en fonction du décalage fréquentiel estimé sur le signal de présence, d'un décalage fréquentiel induit par effet Doppler à l'instant d'émission du signal à émettre, dit décalage fréquentiel ultérieur. Une précompensation du décalage fréquentiel ultérieur peut également être effectuée sur le signal à émettre par l'objet connecté 110, au cours d'une étape 245 du procédé 200, avant ou après la précompensation de l'évolution temporelle ultérieure estimée du décalage fréquentiel.

Dans ce cas, la fréquence de réception de la porteuse du signal par le satellite 120 est sensiblement égale à la fréquence d'émission de la porteuse dudit signal par l'objet connecté 110, avec les deux précompensations par l'objet connecté 110.

La figure 5 illustre l'évolution temporelle de la fréquence d'émission d'une porteuse d'un signal 510 émis par l'objet connecté 110 sans précompensation de l'effet Doppler, du même signal 520 transmis avec précompensation de l'évolution temporelle du décalage fréquentiel et du même signal 525 transmis avec également la précompensation optionnelle du décalage fréquentiel.

La fréquence d'émission de la porteuse du signal 510 sans précompensation est constante au cours de l'émission du signal 510. La fréquence de réception de la porteuse du signal 510 par le satellite 120 est représentée sur la figure 5 par le signal 530. La différence entre le signal 510 et le signal 530 correspond au décalage fréquentiel induit par effet Doppler sur la fréquence de la porteuse du signal 510 au cours de sa transmission. Il convient de souligner que ce décalage fréquentiel étant fonction de la vitesse et de la position relative du satellite 120 par rapport à l'objet connecté 110 évolue au cours du temps. Afin de contrebalancer la dérive fréquentielle temporelle du par l'effet Doppler, une précompensation de l'évolution temporelle du décalage fréquentiel est effectuée sur le signal 510. Le résultat obtenu par cette précompensation est le signal 520 qui est vu par le satellite 120 au moment de sa réception comme un signal 540 ayant une fréquence de réception de la porteuse constante mais généralement différente de la fréquence d'émission de la porteuse du signal 510.

Afin d'obtenir une fréquence de réception de la porteuse constante mais également identique à la fréquence d'émission de ladite porteuse du signal 510, une précompensation du décalage fréquentiel peut être appliquée au signal 520, de sorte que la fréquence d'émission de la porteuse correspond à celle illustrée par le signal 525. Lorsque le signal 525 est émis par l'objet connecté 110, il est reçu par le satellite comme un signal 550 dont la fréquence de réception de la porteuse par ledit satellite 120 est constante et identique à la fréquence d'émission de la porteuse du signal 510.

De manière optionnelle, le procédé 200 peut également comprendre une étape d'identification des signaux destinés au satellite 120 parmi une pluralité de signaux reçus par le satellite 120. Etant donné que les signaux destinés au satellite 120 sont précompensés, ils sont faciles à identifier car ils ne nécessitent pas de traitement préalable de correction de l'effet Doppler. Cette étape est notamment utile dans le cas d'un système de télécommunication hybride.

## Revendications

**1.** Procédé (200) de transmission d'un signal par un dispositif émetteur (110) vers un satellite (120) se déplaçant en orbite autour de la Terre, ledit dispositif émetteur (110) et le satellite (120) comprenant des moyens de télécommunication sans fil,

**caractérisé en ce que** ledit procédé comprend des étapes de :

- réception (210) par ledit dispositif émetteur (110) d'un signal émis par le satellite (120), dit signal de présence ;
- analyse (220) d'un décalage fréquentiel induit par effet Doppler sur le signal de présence reçu par ledit dispositif émetteur (110), l'étape d'analyse (220) comportant une mesure d'une évolution temporelle du décalage fréquentiel induit par effet Doppler sur le signal de présence ;
- estimation (230), en fonction de l'analyse du décalage fréquentiel induit par effet Doppler sur le signal de présence, d'une évolution temporelle ultérieure dudit décalage fréquentiel à partir d'un instant ultérieur prédéterminé de début d'émission du signal à émettre par le dispositif émetteur (110), dit instant d'émission, et sur une durée prédéterminée dudit signal à émettre ;
- précompensation (240) de l'évolution temporelle ultérieure estimée du décalage fréquentiel sur le signal à émettre ;
- émission (250) du signal par ledit dispositif émetteur (110) à partir de l'instant d'émission.

2. Procédé (200) selon la revendication 1, **caractérisé en ce que** l'étape de précompensation (240) de l'évolution temporelle ultérieure du décalage fréquentiel comprend une modulation du signal à émettre avec une fréquence opposée à l'évolution temporelle ultérieure.

3. Procédé (200) selon l'une quelconque des revendications 1 à 2, **caractérisé en ce que** l'évolution temporelle ultérieure du décalage fréquentiel est estimée par extrapolation de l'évolution temporelle du décalage fréquentiel mesurée sur le signal de présence.

4. Procédé (200) selon l'une quelconque des revendications 1 à 3, **caractérisé en ce que** l'évolution temporelle mesurée du décalage fréquentiel est représentée par une courbe théorique dont les paramètres sont calculés par une méthode d'ajustement de courbe.

5. Procédé (200) selon l'une quelconque des revendications 1 à 4, **caractérisé en ce que** l'étape d'analyse (230) comporte une mesure d'une fréquence principale du signal de présence et une estimation d'un décalage fréquentiel induit par effet Doppler sur le signal de présence en fonction de la fréquence principale mesurée et en fonction d'une fréquence principale théorique dudit signal de présence, ledit procédé comportant également des étapes de :

- estimation (235), en fonction du décalage fréquentiel estimé sur le signal de présence, d'un décalage fréquentiel ultérieur induit par effet Doppler à l'instant d'émission du signal à émettre,
- précompensation (245) du décalage fréquentiel ultérieur sur le signal à émettre.

6. Procédé (200) selon l'une quelconque des revendications 1 à 5, **caractérisé en ce que** l'étape d'analyse met en œuvre une boucle à verrouillage de phase.

7. Procédé (200) selon l'une quelconque des revendications 1 à 6, **caractérisé en ce que** l'émission du signal de présence est effectuée en continu sur une période prédéterminée.

8. Dispositif émetteur (110) d'un système (100) de télécommunication sans fil, **caractérisé en ce qu'**il met en œuvre le procédé (200) de transmission selon l'une quelconque des revendications 1 à 7.

9. Système (100) de télécommunication sans fil **caractérisé en ce qu'**il comprend au moins un dispositif émetteur (110) selon la revendication 8, et au moins un satellite (120) se déplaçant en orbite autour de la Terre.

**Patentansprüche**

1. Verfahren (200) der Übertragung eines Signals durch eine Sendevorrichtung (110) zu einem sich im Orbit um die Erde bewegenden Satelliten (120), wobei die Sendevorrichtung (110) und der Satellit (120) Mittel zur drahtlosen Telekommunikation aufweisen,
**dadurch gekennzeichnet, dass** das Verfahren die folgenden Schritte umfasst:

- Empfang (210) durch die Sendevorrichtung (110) eines von dem Satelliten (120) gesendeten Signals, Präsenzsignal genannt;
- Analyse (220) einer durch Dopplereffekt auf das von der Sendevorrichtung empfangene Präsenzsignal (110) induzierten frequenziellen Verschiebung, wobei der Analyseschritt (220) eine Messung einer zeitlichen Entwicklung der von dem auf das Präsenzsignal ausgeübten Dopplereffekt induzierten frequenziellen Verschiebung umfasst;

- Schätzung (230) in Abhängigkeit von der Analyse der von dem auf das Präsenzsignal ausgeübten Dopplereffekt induzierten frequenziellen Verschiebung einer späteren zeitlichen Entwicklung der frequenziellen Verschiebung ab einem vorher festgelegten späteren Moment des Anfangs der Sendung des von der Sendevorrichtung (110) zu sendenden Signals, genannt Sendemoment, und über eine vorher festgelegte Dauer des zu sendenden Signals;

- Vorkompensierung (240) der geschätzten späteren zeitlichen Entwicklung der frequenziellen Verschiebung auf das zu sendende Signal;

- Senden (250) des Signals durch die Sendevorrichtung (110) ab dem Sendemoment.

2. Verfahren (200) nach Anspruch 1, **dadurch gekennzeichnet, dass** der Schritt der Vorkompensierung (240) der späteren zeitlichen Entwicklung der frequenziellen Verschiebung eine Modulierung des zu sendenden Signals mit einer der späteren zeitlichen Entwicklung entgegengesetzten Frequenz umfasst.

3. Verfahren (200) nach einem der Ansprüche 1 bis 2, **dadurch gekennzeichnet, dass** die spätere zeitliche Entwicklung der frequenziellen Verschiebung durch Extrapolation der zeitlichen Entwicklung der auf dem Präsenzsignal gemessenen frequenziellen Verschiebung geschätzt wird.

4. Verfahren (200) nach einem der Ansprüche 1 bis 3, **dadurch gekennzeichnet, dass** die gemessene zeitliche Entwicklung der frequenziellen Verschiebung durch eine theoretische Kurve dargestellt wird, deren Parameter durch eine Methode zur Kurvenanpassung kalkuliert wurden.

5. Verfahren (200) nach einem der Ansprüche 1 bis 4, **dadurch gekennzeichnet, dass** der Analyseschritt (230) eine Messung einer Hauptfrequenz des Präsenzsignals und eine Schätzung einer durch den Dopplereffekt auf das Präsenzsignal induzierten frequenziellen Verschiebung in Abhängigkeit von der gemessenen Hauptfrequenz und in Abhängigkeit von einer theoretischen Hauptfrequenz des Präsenzsignals umfasst, wobei das Verfahren gleichermaßen die folgenden Schritte umfasst:

- Schätzung (235) in Abhängigkeit von der geschätzten frequenziellen Verschiebung auf dem Präsenzsignal einer durch den auf den Dopplereffekt induzierten späteren frequenziellen Verschiebung im Sendemoment des zu sendenden Signals,

- Vorkompensierung (245) der späteren frequenziellen Verschiebung auf das zu sendende Signal.

6. Verfahren (200) nach einem der Ansprüche 1 bis 5, **dadurch gekennzeichnet, dass** der Analyseschritt eine Phasenvierregelungsschleife in Gang setzt.

7. Verfahren (200) nach einem der Ansprüche 1 bis 6, **dadurch gekennzeichnet, dass** die Sendung des Präsenzsignals für einen vorher festgelegten Zeitraum kontinuierlich ausgeführt wird.

8. Sendevorrichtung (110) eines Systems (100) zur drahtlosen Telekommunikation, **dadurch gekennzeichnet, dass** sie ein Verfahren (200) der Übertragung nach einem der Ansprüche 1 bis 7 in Gang setzt.

9. System (100) zur drahtlosen Kommunikation, **dadurch gekennzeichnet, dass** es wenigstens eine Sendevorrichtung (110) nach Anspruch 8 und wenigstens einen sich im Orbit um die Erde bewegenden Satelliten (120) umfasst.

**Claims**

1. Method (200) for transmitting a signal by a transmitter device (110) to a satellite (120) moving in orbit around the Earth, said transmitter device (110) and the satellite (120) comprising wireless telecommunication means, **characterised in that** said method comprises the steps of:

- receiving (210), by said transmitter device (110), a signal transmitted by the satellite (120), termed the presence signal;

- analysing (220) a frequency shift induced by the Doppler effect on the presence signal received by said transmitter device (110), the step of analysing (220) comprising a measurement of a change over time of the frequency shift induced by the Doppler effect on the presence signal;

- estimating (230), according to the analysis of the frequency shift induced by the Doppler effect on the presence signal, a later change over time of said frequency shift from a later predetermined time of the beginning of transmission of the signal to be transmitted by the transmitter device (110), termed the transmission time, and over a predetermined duration of said signal to be transmitted;

- precompensating (240) the later change over time estimated from the frequency shift on the signal to be transmitted;

- transmitting (250) of the signal by said transmitter device (110) from the transmission time.

2.  Method (200) according to claim 1, **characterised in that** the step of precompensating (240) the later change over time of the frequency shift comprises a modulation of the signal to be transmitted with a frequency opposite the later change over time.

3.  Method (200) according to any of claims 1 to 2, **characterised in that** the later change over time of the frequency shift is estimated by extrapolation of the change over time of the frequency shift measured the presence signal.

4.  Method (200) according to any of claims 1 to 3, **characterised in that** the measured change over time of the frequency shift is represented by a theoretical curve of which the parameters are calculated by a curve-fitting method.

5.  Method (200) according to any of claims 1 to 4, **characterised in that** the step of analysing (230) comprises a measurement of a main frequency of the presence signal and an estimation of a frequency shift induced by the Doppler effect on the presence signal according to the main frequency measured and according to a theoretical main frequency of said presence signal, said method also comprising the steps of:

    - estimating (235), according to the estimated frequency shift on the presence signal, a later frequency shift induced by the Doppler effect to the effect of the transmission time of the signal to be transmitted,
    - precompensating (245) the later frequency shift on the signal to be transmitted.

6.  Method (200) according to any of claims 1 to 5, characterissed in that the step of analysing implements a phase-locked loop.

7.  Method (200) according to any of claims 1 to 6, **characterised in that** the transmission of the presence signal is carried out continuously over a predetermined period.

8.  Transmitter device (110) of a wireless telecommunications system (100), **characterised in that** it implements the method (200) for transmitting according to any of claims 1 to 7.

9.  Wireless telecommunications system (100) **characterised in that** it comprises at least one transmitter device (110) according to claim 8, and at least one satellite (120) moving in orbit around the Earth.

FIG. 1

FIG. 2

FIG. 3

**FIG. 4**

**FIG. 5**

**EP 3 556 028 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2010290356 A